(19) Europäisches Patentamt

European Patent Office

Office européen des brevets

(11) **EP 4 787 322 A1**

(12) **EUROPEAN PATENT APPLICATION**

(43) Date of publication:
**05.08.2026** Bulletin 2026/32

(21) Application number: **26156281.3**

(22) Date of filing: **04.02.2026**

(51) International Patent Classification (IPC):
*G06T 13/40* (2011.01)   *G06T 19/20* (2011.01)
*G06T 15/20* (2011.01)   *G06T 17/00* (2006.01)

(52) Cooperative Patent Classification (CPC):
**G06T 13/40; G06T 17/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.02.2025 US 202563753509 P**

(71) Applicants:
• **Meshcapade GmbH**
**72072 Tübingen (DE)**
• **Max-Planck-Gesellschaft zur Förderung der Wissenschaften e.V.**
**80539 München (DE)**

(72) Inventors:
• **Rosu, Radu Alexander**
**53113 Bonn (DE)**
• **Wu, Keyu**
**Hangzhou, 310058 (CN)**
• **Black, Michael**
**72076 Tübingen (DE)**

(74) Representative: **Cameron Intellectual Property Ltd**
**Moncrieff House**
**69 West Nile Street**
**Glasgow G1 2QB (GB)**

(54) **SYSTEMS AND METHODS FOR RECONSTRUCTING 3D HAIR USING DIFFUSION MODELS**

(57)    Systems and methods are provided for reconstructing 3D hair geometry. In some examples, the method includes for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation and the corresponding synthetic image to generate a trained diffusion model.

FIG. 1

EP 4 787 322 A1

**Description**

RELATED APPLICATION

This application is related to and claims priority from US Provisional Application 63/753,509, filed 02/04/2025, titled "DiffLocks: Reconstructing 3D Hair from a Single Image using Diffusion Models," the disclosure of which is incorporated herein by reference in its entirety.

TECHNICAL FIELD

Certain embodiments of the present disclosure generally relate to reconstructing three-dimensional (3D) hair geometry. More specifically, some embodiments of the disclosure relate to systems and methods for reconstructing 3D hair geometry using diffusion models.

BACKGROUND

Realistic 3D hair is an essential component of digital humans, which are widely used in games, media, and entertainment. High-quality hair representation significantly improves a character's realism and overall visual fidelity. However, generating realistic hair and reconstructing it from images remain challenging tasks due to the complex three-dimensional structure of hair and the wide diversity of hairstyles. Since the introduction of the first 3D synthetic hair dataset, numerous hair-reconstruction techniques have been developed. Multi-view capture systems and video-based approaches can produce high-fidelity 3D hair, but they are time-consuming and difficult to deploy because they require specialized equipment or controlled capture environments. Single-view methods, which reconstruct 3D hair from a single image, offer greater speed, accessibility, and ease of use, but they often generate low-detail results and support only a limited range of hairstyles. These methods also struggle with challenging cases such as male-pattern baldness and highly curly or afro-textured hair, which exhibit complex geometric characteristics.

SUMMARY

Certain embodiments of the present disclosure generally relate to reconstructing 3D hair geometry. More specifically, some embodiments of the disclosure relate to systems and methods for reconstructing 3D hair geometry using diffusion models.

As recited in examples, Example 1 is a method for reconstructing 3D hair geometry. The method includes for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation, the plurality of texels, and the corresponding synthetic image to generate a trained diffusion model.

As recited in examples, Example 2 is a system that includes at least one processor, and memory storing instructions that, when executed by the at least one processor, cause the system to perform a set of operations. In some examples, the set of operations includes for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation, the plurality of texels, and the corresponding synthetic image to generate a trained diffusion model.

As recited in examples, Example 3 is a non-transitory computer-readable medium storing instructions. In some examples, the instructions when executed by one or more processors, cause the one or more processors to perform a set of operations including for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation, the plurality of texels, and the corresponding synthetic image to generate a trained diffusion model.

While multiple embodiments are disclosed, still other embodiments of the present disclosure will become apparent to those skilled in the art from the following detailed description, which shows and describes illustrative embodiments of the disclosure. Accordingly, the drawings and detailed description are to be regarded as illustrative in nature and not restrictive.

BRIEF DESCRIPTION OF THE DRAWINGS

FIG. 1 is a simplified block diagram illustrating an example system for reconstructing 3D hair geometry, in accordance with embodiments of the subject matter of the disclosure.

FIG. 2 is a simplified block diagram illustrating an example pipeline for reconstructing 3D hair geometry, in accordance with embodiments of the subject matter of the disclosure.

FIG. 3 illustrates example RGB images from a synthetic hair dataset, in accordance with embodiments of the subject matter of the disclosure.

FIG. 4 illustrates a variety of example hairstyles based on a coarse set of guide strands, in accordance with embodiments of the subject matter of the disclosure.

FIGS. 5A-5D illustrate an example process of scalp interpolation, in accordance with embodiments of the subject matter of the disclosure.

FIG. 6 illustrates example rendering results from a real-time game engine based on strand-based hair, in accordance with embodiments of the subject matter of the disclosure.

FIG. 7 illustrates a qualitative comparison between results of an example 3D hair reconstruction method and comparative hair reconstruction methods, in accordance with embodiments of the subject matter of the disclosure.

FIG. 8 illustrates ablation of conditioning signal and model architecture, in accordance with embodiments of the subject matter of the disclosure.

FIG. 9A is a flow diagram illustrating an example method for reconstructing 3D hair geometry, in accordance with embodiments of the subject matter of the disclosure.

FIG. 9B is a flow diagram illustrating an example method of reconstructing 3D hair geometry, in accordance with embodiments of the subject matter of the disclosure.

FIG. 10 is a simplified block diagram of a computing device and/or a computing system, with which aspects of the present disclosure may be practiced.

While the disclosure is amenable to various modifications and alternative forms, specific embodiments have been shown by way of example in the drawings and are described in detail below. The intention, however, is not to limit the disclosure to the particular embodiments described. On the contrary, the disclosure is intended to cover all modifications, equivalents, and alternatives falling within the scope of the disclosure as defined by the appended claims.

DETAILED DESCRIPTION

As the terms are used herein with respect to measurements (e.g., dimensions, characteristics, attributes, components, etc.), and ranges thereof, of tangible things (e.g., products, inventory, etc.) and/or intangible things (e.g., data, electronic representations of currency, accounts, information, portions of things (e.g., percentages, fractions), calculations, data models, dynamic system models, algorithms, parameters, etc.), "about" and "approximately" may be used, interchangeably, to refer to a measurement that includes the stated measurement and that also includes any measurements that are reasonably close to the stated measurement, but that may differ by a reasonably small amount such as will be understood, and readily ascertained, by individuals having ordinary skill in the relevant arts to be attributable to measurement error; differences in measurement and/or manufacturing equipment calibration; human error in reading and/or setting measurements; adjustments made to optimize performance and/or structural parameters in view of other measurements (e.g., measurements associated with other things); particular implementation scenarios; imprecise adjustment and/or manipulation of things, settings, and/or measurements by a person, a computing device, and/or a machine; system tolerances; control loops; machine-learning; foreseeable variations (e.g., statistically insignificant variations, chaotic variations, system and/or model instabilities, etc.); preferences; and/or the like.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

According to certain embodiments, systems and methods for reconstructing 3D hair are provided. It is to be understood that the term "hair" covers both human hair, beards, eyebrows, body hair, and animal fur, and the systems and methods described herein are applicable to reconstructing human hair, beards, eyebrows and other body hair, as well as reconstructing 3D fur on animals.

Conventional systems and methods for three-dimensional hair reconstruction exhibit a number of limitations. In certain implementations, single-view approaches that attempt to reconstruct 3D hair from a single image frequently generate low-detail results and are capable of handling only a limited range of hairstyles. Such approaches also tend to perform poorly when processing male-pattern baldness or highly curly hair, including afro-like hairstyles, due to the complex geometric structure of these hair types. In addition, many existing techniques are constrained by insufficiently diverse and comprehensive hairstyle training datasets. To increase dataset diversity, some methods incorporate artist-created hairstyles and apply data-augmentation techniques; however, these datasets are typically not publicly available, lack paired RGB images, or require substantial manual effort during creation.

In certain examples, approaches attempt to address limited training data by introducing intermediate representations that simplify the reconstruction task. Many such methods employ oriented filters to extract hair structure from images. Other techniques avoid modeling full hair strands directly and instead generate a hairstyle from a reduced set of guide strands that are subsequently upsampled. Additionally, some approaches apply variational autoencoding to compress guide-strand information across the scalp into a low-dimensional latent representation. Although these strategies are intended to mitigate data scarcity, they introduce two significant limitations: (1) they restrict the ability to capture complex spatial relationships among individual strands, and (2) they reduce realism by relying on low-dimensional compressed representations. As a result, these methods operate in a constrained latent space and require substantial upsampling and post-processing to approximate realistic hair geometry.

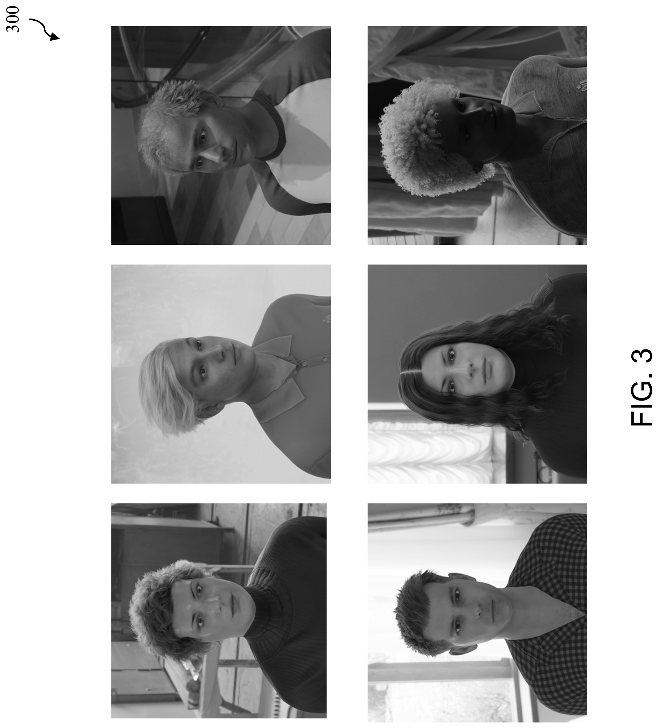

According to certain embodiments, the present disclosure adopts a different strategy by emphasizing the creation of a sufficiently large and diverse training dataset, thereby eliminating the need for the simplifying assumptions employed in prior methods. In some embodiments, a three-dimensional synthetic hair dataset is generated, including, for example, a relatively large number (e.g., 10,000, 20,000, 40,000, 50,000, etc.) of samples spanning a broad range of hairstyles. It is to be understood that in some examples, the number of samples may vary. FIG. 3 illustrates an example set of RGB images 300 from such a synthetic dataset. Each sample may include a set of 3D hair strands together with a realistic RGB image rendered using a 3D creation and rendering system or software engine (e.g., Blender available from the Blender Foundation), through path-tracing. In some examples, each sample from the dataset contains an image at, for example, a resolution of $768 \times 768$, together with the corresponding 3D strand geometry of, e.g.,100K strands. It is to be understood that the resolution and/or the number of strands may vary, according to some embodiments.

In some embodiments, the dataset can be produced automatically using a variety of artist-inspired procedural techniques. Traditional approaches often construct a single hairstyle using a small geometry-node network specifically tailored to that style. In contrast, certain embodiments of the present disclosure employ a large and highly general geometry-node network within a 3D creation and rendering system (e.g., Blender), enabling automatic generation of a wide array of realistic hairstyles by varying different parameters.

In certain embodiments, the synthetic dataset can be employed to train a diffusion model implemented within a hair reconstruction framework, such as DiffLocks™. As described herein, DiffLocks™ is a hair-reconstruction model and system developed by Meshcapade GmbH that employs diffusion-based generative modeling to produce strand-level 3D hair geometry from a single input image. In some embodiments, the diffusion model can be trained on a large synthetic dataset including, for example, about 40,000 or other numbers of hairstyles created in a 3D creation and rendering system (e.g., Blender). As described herein, Blender is 3D creation software platform that provides tools for modeling, animation, simulation, and photorealistic rendering, including a path-tracing engine and procedural geometry-generation capabilities.

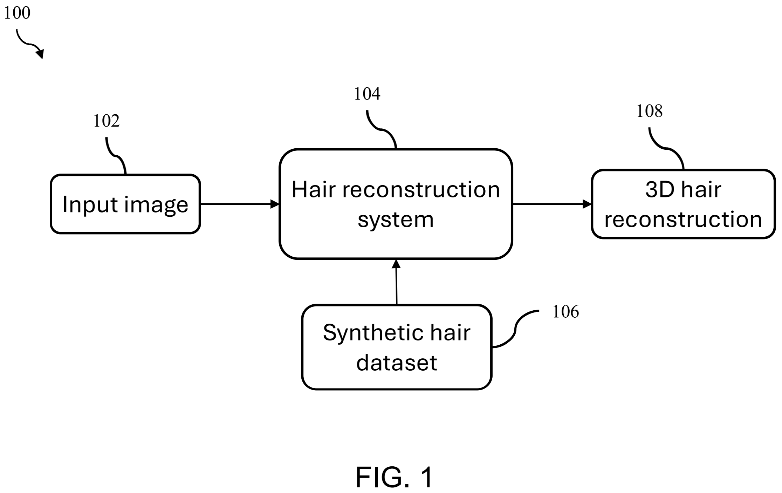

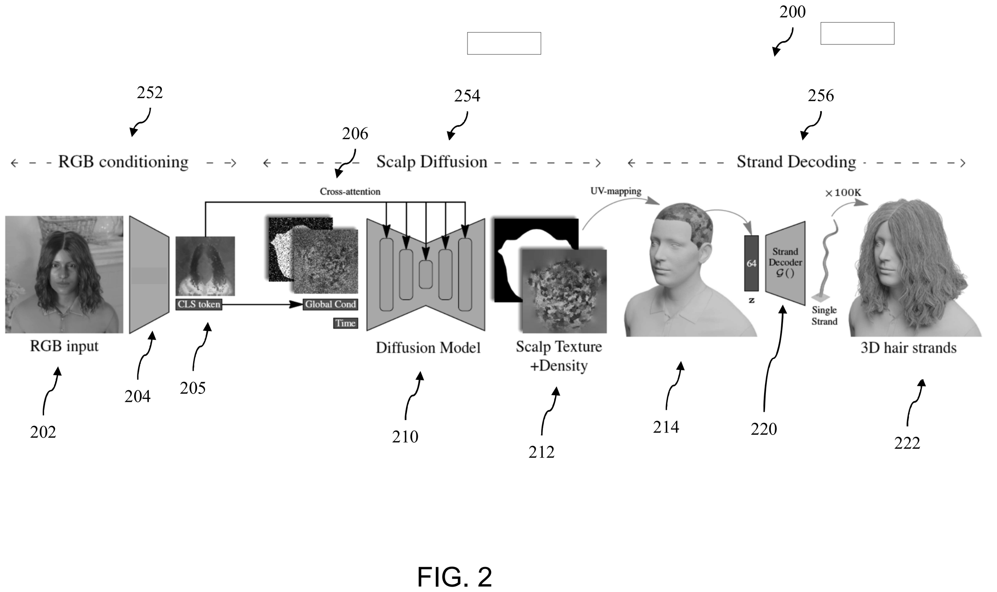

In some embodiments, the diffusion model can be optionally conditioned on a single RGB image to enable reconstruction of highly detailed three-dimensional hair strands. FIG. 1 is a simplified block diagram illustrating an example hair reconstruction system or framework 104 for reconstructing 3D hair geometry, in accordance with embodiments of the subject matter of the disclosure. In some embodiments, an example hair reconstruction system or framework 104 can implement a diffusion model which is trained by using a synthetic hair dataset 106. In some embodiments, the hair reconstruction system or framework 104 receives a single RGB image 102 and reconstructs accurate 3D strands 108 using a diffusion model (e.g., diffusion model 210 in FIG. 2).

FIG. 2 is a simplified block diagram illustrating an example pipeline 200 for reconstructing 3D hair geometry, in accordance with embodiments of the subject matter of the disclosure. In some embodiments, the pipeline 200 includes a sequence of stages including, for example, image conditioning 252, scalp diffusion 254, and strand decoding 256. In some embodiments, in the stage of image conditioning 252, a pretrained vision transformer 204 can be used to extract local and global features from an input image 202. In some examples, local features may include spatially varying information (e.g.,

curls, parting, silhouette). In some examples, global features may include overall hairstyle cues (e.g., length, volume, texture). The extracted features can serve as conditioning signals for the diffusion model 210 in the next stage.

In some embodiments, in the stage of scalp diffusion 254, the scalp diffusion model 210 denoises a density map and a scalp or skin texture 212 containing latent codes for strand geometry. In some examples, the density map indicates where hair exists on the scalp and the scalp or skin texture can be a 2D grid where each texel stores a latent vector describing a strand's shape. In some embodiments, the scalp or skin texture is associated with a 3D scalp surface 214 through UV-mapping, enabling each texel to correspond to a location on the scalp. The term "UV" refers to a two-dimensional coordinate system used to map a flat texture onto a three-dimensional surface, where "U" is the horizontal axis and "V" is the vertical axis.

In some embodiments, in the stage of strand decoding 256, texels can be probabilistically sampled from the scalp or skin texture. In some examples, sampling follows the density map so dense regions produce more strands. In some embodiments, for each sampled texel, the latent code can be decoded by a strand decoder 220 into strands of a set of points (e.g., 256 points). In some embodiments, decoding in parallel a large set of strands (e.g., 100K) yields the final hairstyle 222.

In some embodiments, a diffusion transformer architecture such as, for example, an Hourglass Diffusion Transformer (HDiT) architecture available from, for example, XivLabs, is utilized. In some embodiments, features extracted from a pretrained model, for example, a pretrained vision transformer model (e.g., DINOv2, which is available from XivLabs) serve as conditioning inputs to guide and control the generated results. The feature representation, including those provided by DINOv2, accordingly to some embodiments, provide substantially richer structural information than the oriented filters commonly used in existing approaches.

In some embodiments, systems and methods described herein directly regress latent codes for individual hair strands rather than for a reduced set of guide strands, allowing the transformer to learn fine-grained spatial relationships among strands across the scalp. In some embodiments, with access to sufficiently large and diverse training data, there is no longer a need to embed hairstyles into a low-dimensional scalp representation. In certain embodiments, the system further models a density map that specifies the probability of generating a strand at each scalp location. Collectively, these hair reproduction mechanisms yield significantly improved realism, particularly for curly and balding hairstyles. In some embodiments, the resulting strand-based hair representations can be used directly in real-time game engines (e.g., Unreal Engine available from Epic Games, Inc.) without requiring additional heuristics to densify the hair or introduce finer-scale detail.

In certain embodiments, the availability of sufficiently large and diverse training data enables the systems and methods described herein to eliminate several components commonly required in existing approaches. For example, unlike the 32×32 scalp map employed by HAAR, a diffusion model developed by Max Planck Institute for Intelligent Systems, may predict a scalp or skin texture (e.g., scalp or skin texture and density 212 in FIG. 2) with a relatively higher resolution, e.g., 256×256. In some examples, the resolution may vary. In some embodiments, each pixel of this texture encodes a latent representation corresponding to a single hair strand, from which DiffLocks™ software can directly decode full three-dimensional strands. In certain embodiments, no additional post-processing-such as strand upsampling or the injection of random noise-is required. In some embodiments, the training dataset includes realistic hairstyles with natural variations, including flyaway strands, and the diffusion model learns to generate such details inherently.

In certain embodiments, the systems and methods described herein can generate a three-dimensional hair dataset including a large collection (e.g., about 20,000, about 40,000, about 50,000, etc.) of diverse and realistic 3D hairstyles paired with corresponding RGB images. Such a dataset may be utilized for a variety of hair-modeling and hair-synthesis applications. In some embodiments, the systems and methods can further produce an enhanced scalp representation that supports the reconstruction of hairstyles exhibiting varying hair densities, including, for example, bald spots and male-pattern baldness. In some embodiments, a conditional scalp-diffusion framework is provided for robustly reconstructing 3D hair directly from a single RGB image, thereby eliminating the need for an intermediate two-dimensional orientation map. This framework enables accurate reconstruction across a wide range of challenging hairstyles, achieves state-of-the-art performance, and facilitates the reconstruction of afro-like and bald hairstyles.

In certain implementations, multi-view-based hair reconstruction techniques are employed to generate three-dimensional hair geometry. Many such methods recover 3D hair structure under constraints imposed by a two-dimensional orientation map, which often necessitates specialized hardware or multi-camera capture rigs. In some examples, monocular video-based approaches reduce hardware requirements but typically sacrifice accuracy and still depend on carefully controlled capture conditions. To further relax these constraints, single-view-based methods have been developed that utilize deep neural networks to infer volumetric fields from data priors learned from synthetic 3D hair datasets. Although these approaches enable rapid 3D hair reconstruction, they generally produce low-fidelity geometry and are limited to a narrow range of hairstyles due to insufficient diversity in available training datasets.

According to certain embodiments, the systems and methods described herein perform hair reconstruction from a single RGB image. In some embodiments, the focus is on fast and robust reconstruction across a broad spectrum of hairstyles, including challenging categories such as balding patterns and tightly curled, afro-like styles-hair types that have received relatively little attention in prior work.

In addition to hair reconstruction, three-dimensional hair generation represents another significant challenge and serves as an essential source of synthetic data for high-quality reconstruction. Certain existing approaches employ heuristic, example-based generation techniques that are inherently constrained by the limited variety of their reference hair models. Other methods encode a 3D hair dataset using a variational autoencoder (VAE), enabling the synthesis of plausible but often overly smooth hairstyles. To improve quality and diversity, some techniques utilize publicly available 3D datasets and attempt to disentangle global hairstyle shape from local strand-level detail. Despite these efforts, the overall scale and diversity of synthetic 3D hair datasets remain insufficient.

Some existing systems, such as GroomGen and HAAR, introduce parameterized variations derived from high-quality artist-crafted hairstyles to expand dataset diversity, and they train generative models capable of producing 3D hairstyles from noisy inputs or text prompts. Additional methods focus specifically on modeling the physical principles underlying curly or afro-textured hair, providing tools for animators to create realistic styles.

According to certain embodiments, the systems and methods described herein provide a low-cost synthetic 3D hair-generation pipeline and employ it to construct a dataset that is substantially more diverse than prior datasets. In some embodiments, this dataset is further used to train a generative hair-reconstruction model conditioned on single-image input.

In certain implementations, existing neural methods for reconstructing three-dimensional objects from images distill information from pretrained two-dimensional diffusion models, such as Stable Diffusion, using techniques like Score Distillation Sampling (SDS). However, such pretrained models generally lack the multi-view consistency required for accurate 3D reconstruction. To compensate for this limitation, some approaches train custom 2D diffusion models capable of generating multi-view images from a single input, thereby enabling more accurate 3D reconstruction through integration of the synthesized views. In some examples, these techniques can be computationally expensive and time-consuming due to the iterative sampling and reconstruction procedures involved. This has motivated alternative approaches in which diffusion models are trained to generate 3D representations directly, such as meshes or triplane features, though these methods typically require substantial computational resources for 3D processing within the network.

According to certain embodiments, systems and methods described herein generate a two-dimensional representation that inherently encodes three-dimensional hair information, enabling direct decoding into 3D hair geometry without the need for extensive multi-view generation or the computational overhead associated with training full 3D diffusion models.

In certain embodiments, systems and methods described herein provide a pipeline for three-dimensional hair reconstruction from a single input image. In some embodiments, the pipeline includes a first stage in which a data-generation process utilizes a geometry-node framework from a 3D creation and rendering system (e.g., Blender) to create a large and diverse synthetic dataset comprising paired RGB images and corresponding 3D hair representations. In additional embodiments, the pipeline includes a second stage involving parameterization of hair strands and hairstyles into a canonical scalp space to produce scalp-texture representations. In further embodiments, the pipeline includes a third stage in which a conditional diffusion model (e.g., DiffLocks™ model) is trained using the synthetic images and associated scalp or skin textures.

According to some embodiments, systems and methods for 3D hair reconstruction described herein can be provided by implementing one or more computing models. In certain embodiments, a model, also referred to as a computing model, includes a model to process data. A model includes, for example, an artificial intelligence (AI) model, a machine learning (ML) model, a deep learning (DL) model, an image processing model, an algorithm, a rule, other computing models, and/or a combination thereof.

In some embodiments, a generative AI (artificial intelligence) model includes training data embedded in the model. In certain embodiments, a generative AI model is a type of AI model that can be used to produce various type of content, such as text, images, videos, audio, 3D (three-dimensional) data, 3D models, and/or the like.

In certain embodiments, the machine learning model includes a generative model. In some embodiments, the generative model can be trained on a dataset and having a number of trainable parameters. Such a generative model can learn complex statistical relationships within high-dimensional data and can produce coherent and realistic outputs when provided with appropriate conditioning information. In some embodiments, a generative model can employ a transformer-based architecture, which can utilize an attention mechanism to identify and emphasize relevant portions of the input features. In some embodiments, a generative model may include a vision transformer, a diffusion model, and/or a diffusion-transformer architecture. In some embodiments, a vision transformer can be trained to extract semantic and/or structural representations from image data. In some embodiments, a diffusion model can be trained to iteratively denoise samples to generate high-fidelity outputs. In some embodiments, a diffusion-transformer architecture can combine the representational capabilities of transformers with the iterative refinement process characteristic of diffusion models. In some embodiments, multiple machine learning models, individually or in combination, can be used to generate, refine, or infer complex visual or geometric content based on the input data provided

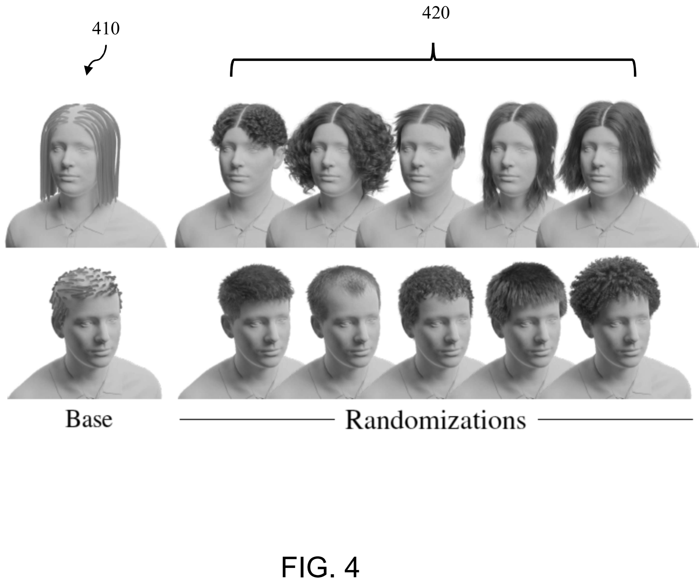

In certain embodiments, systems and methods described herein provide data-generation mechanisms that address a significant bottleneck in the technical field of 3D hair reconstruction, for example, the limited availability of public datasets, such as the 343 hairstyles in the USC-HairSalon dataset and the 10 hairstyles in CT2Hair dataset. In addition, these datasets often lack corresponding 2D images, further restricting their usefulness. In some embodiments, the disclosed systems and methods introduce a data-generation pipeline that employs geometry nodes from a 3D creation and rendering system (e.g., Blender) to introduce controlled variation into a small set of guide strands 410 (e.g., manually defined), as illustrated in FIG. 4. The primary stages of this pipeline are described below.

In certain embodiments, the first step in constructing the dataset involves defining a scalp mesh on which the hairstyles are generated. In some examples, owing to its broad use in human-reconstruction applications, a generic parametric human-body model (e.g., SMPL-X model) is employed to define the scalp region. A neutral SMPL-X body with a mean body shape is created, and the vertices corresponding to the scalp are identified-either manually or automatically-to extract the scalp mesh, as illustrated in FIG. 2. The resulting mesh is then UV-unwrapped into a single chart using an As-Rigid-As-Possible (ARAP) parameterization to minimize distortion. In some embodiments, this operation is performed once and does not need to be repeated for individual subjects, as all subjects share the same SMPL-X body topology.

In certain embodiments, the next step involves creating a set of base hairstyles. The scalp mesh can be imported into a 3D creation and rendering system (e.g., Blender), and a collection of hairstyles is generated-either manually or automatically-in the form of coarsely defined guide strands 410, as illustrated in FIG. 4. These base hairstyles 410 serve as initial templates for subsequent randomization and therefore need only capture the overall shape and directional flow of the hair rather than fine-grained detail. In some embodiments, starting from the coarse set of guide strands 410, the Blender pipeline is able to generate a wide variety of hairstyles 420, covering different lengths, curliness and density patterns. In some examples, a set of base styles may be manually authored, each including, for example, approximately 50 strands. This process is not labor-intensive, as each base hairstyle can typically be created within a few minutes.

In certain embodiments, the next step involves randomizing a set of base hairstyles through a dedicated randomization pipeline. In some embodiments, a set of guide strands are processed through a sequence of transformations implemented as geometry nodes in a 3D creation and rendering system (e.g., Blender), which progressively introduce additional detail. Initially, the guide strands are interpolated to K strands, after which clumping, curling, and noise operations are applied. These transformations may be repeated multiple times with varying intensities to increase diversity. In some embodiments, one or more shrinkwrap modifiers are incorporated at different stages of the pipeline to prevent hair strands from penetrating the scalp or intersecting with the body.

In certain embodiments, the overall pipeline includes geometry nodes responsible for strand transformations, along with auxiliary nodes that supply parameters to the primary nodes. A hair bidirectional-scattering-distribution-function (BSDF) material may be defined using the Chiang model to simulate realistic strand appearance. In some embodiments, physics-based variation(s) can be applied by introducing realistic, naturally occurring differences in digital hair strand geometry by applying a physical simulation, in addition to procedural or randomized geometric operations. In some embodiments, a physics simulation can be applied using a cloth simulation system (e.g., Blender's cloth-simulation system), with randomized wind direction and gravity strength to introduce natural variation. In some examples, a set of parameters governs the entire generation process in a 3D creation and rendering system (e.g., Blender)-including geometric and material properties-and these parameters may be randomly sampled within empirically determined minimum and maximum ranges.

In certain embodiments, the next step involves rendering realistic images that approximate the lighting conditions of real-world scenes. In some examples, high-dynamic-range-image (HDRI) environments from Poly Haven may be employed, with exposure and azimuthal angle randomized to introduce lighting variation. Additionally, albedo, normal, and roughness textures for the body can be randomly selected from a library of artist-created SMPL-X materials. In some embodiments, facial-expression coefficients are randomly varied, for example, within the range [-1,1], while the jaw is kept closed to avoid complications in strand-physics simulation.

In certain embodiments, the robustness of a neural network (e.g., used for 3D hair reconstruction) to variations in camera parameters is enhanced by randomizing the camera position and focal length within predefined ranges, while preserving a consistent look-at direction toward the head. In some embodiments, the complete dataset includes K samples, each including, for example, about 100,000 three-dimensional hair strands together with a corresponding RGB image rendered via path tracing at a resolution of, for example, 768×768. In some embodiments, a density map is generated to represent the probability of producing a strand at each texel of the scalp. This density map is particularly useful for modeling hairstyles that exhibit balding patterns.

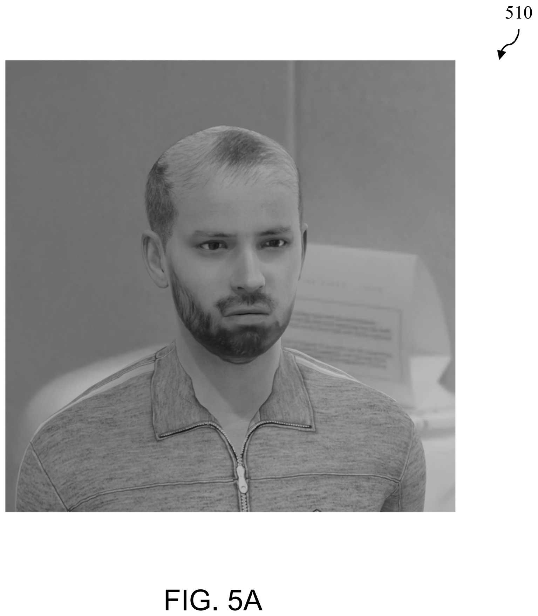

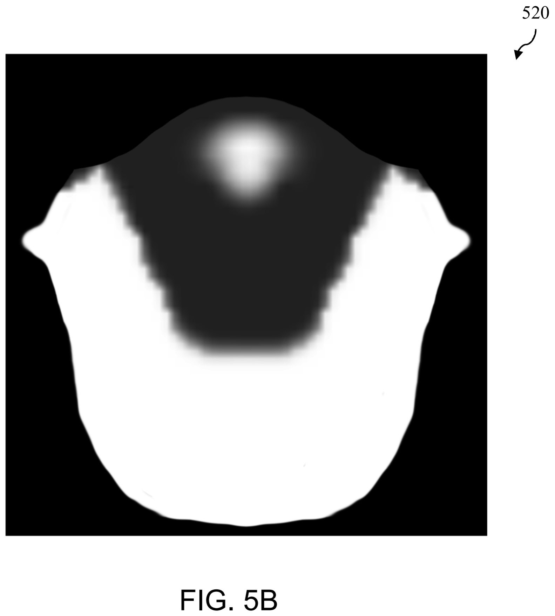

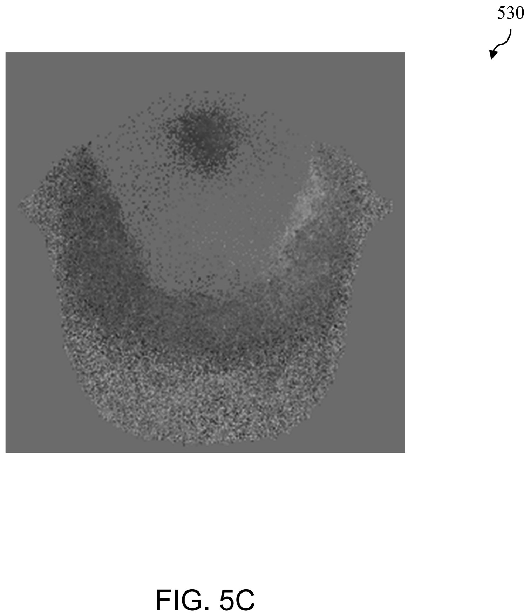

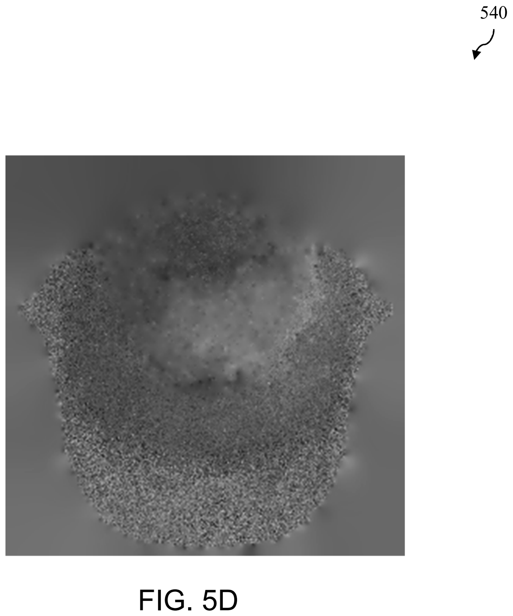

FIGS. 5A-5D illustrate an example process of scalp interpolation, in accordance with embodiments of the subject matter of the disclosure. In some embodiments, embedding each strand onto a scalp or skin texture can leave gaps where no strand is present. In some embodiments, to enable probabilistic sampling of strands, the sparse strand embeddings are interpolated to achieve a smooth scalp or skin texture that can be sampled at any position according to the density map. FIG. 5A illustrates a rendered or synthetic RGB image 510 of a hairstyle, which serves as the visual reference for generating the density map and scalp or skin texture. FIG. 5B illustrates a scalp density map 520 indicating where hair exists on the scalp. FIG. 5C illustrates a raw scalp or skin texture 530, which stores latent strand codes at texels where a strand root exists. FIG. 5D illustrates an interpolated texture 540, which can be the push-pull interpolated version of the raw texture 530.

According to some embodiments, systems and methods described herein can parametrize a 3D hairstyle (e.g., one generated from the pipeline in a 3D creation and rendering system such as Blender) onto a scalp surface using a regular 2D texture representation. In some embodiments, an individual 3D strand can be modeled as a set of L 3D points represented by S = {$p_1$, $p_2$, $\cdots$, $p_L$}, where L is an integer, for example, 256. In some embodiments, a complete hairstyle includes a large collection of strands (e.g., about 100K) denoted as $H = \{S_j\}_0^{100K}$ .

In some embodiments, a strand-level variational autoencoder (VAE) can be trained to compress each strand into a compact latent representation z∈R^64, in a manner similar to Neural Strands. In some examples, the VAE encoder $\varepsilon(\cdot)$ is modeled as a series of 1D convolutional layers, and the decoder denoted by $\mathcal{G}(\cdot)$ is a modulated SIREN that reconstructs the strand by mapping the latent code z back to a series of 3D points S.

In some embodiments, a curvature loss $\mathcal{L}_{cur}$ is incorporated in addition to the position and direction loss such as used in Neural Strands (See: radualexandru.github.io/neural_strands/). This addition is motivated by the observation that, for tightly coiled or highly curved hair, perceptual fidelity depends more on accurately capturing strand curvature than on matching the precise position of every point along the strand. In other words, as long as the strand exhibits the correct overall curl behavior, small per-point positional deviations are acceptable.

In some embodiments, a local curvature is defined as the instantaneous change in direction, $\kappa_i = \mathbf{d}_{i+1} - \mathbf{d}_i$, where the direction vector is given by the positional difference $\mathbf{d}_i = \mathbf{p}_{i+1} - \mathbf{p}_i$. Accordingly, the curvature loss is defined as the L1 distance between the ground-truth curvature and the predicted curvature represented by $L_{cur} = \sum_0^L |ki - \widetilde{ki}|$ , where $\mathcal{L}_{cur}$ is the curvature loss, $ki$ denotes the curvature value at point i along the hair strand, and $\widetilde{ki}$ is the curvature of the predicted strand.

In some embodiments, the final training loss of the strand-level VAE is formulated as a weighted combination of a data term including positional, directional and curvature losses together with a KL-divergence regularization term as represented by equations (1) and (2) below:

$$L_{data} = \sum_0^L |pi - \widetilde{pi}| + \lambda 1 |di - \widetilde{di}| + \lambda 2 |ki - \widetilde{ki}| \quad \ldots\ldots \text{ Equation (1)}$$

$$L_{VAE} = L_{data} + \lambda_{KL} L_{KL} \ldots\ldots \text{ Equation (2)}$$

where $pi$ denotes the ground-truth 3D position of point $i$ along the strand, $\widetilde{pi}$ denotes the predicted 3D position of point i produced by the decoder, $di$ denotes the ground-truth direction vector at point i, $\widetilde{di}$ denotes the predicted direction vector, $ki$ denotes the ground-truth curvature at point i, $\widetilde{ki}$ denotes the predicted curvature, $\lambda 1$ denotes a first weighting coefficient, $\lambda 2$ denotes a second weighting coefficient, $\lambda_{KL}$ denotes a third weighting coefficient, $L_{KL}$ denotes the Kullback-Leibler divergence, $L_{data}$ denotes the combined positional, directional, and curvature loss, and $L_{VAE}$ denotes the total training loss.

According to some embodiments, each 3D hairstyle generated by the pipeline associated with a 3D creation and rendering system (e.g., Blender) is parametrized onto the scalp surface using a regular 2D texture representation. In some embodiments, each strand S is encoded to a latent code (e.g., vector) z by the strand encoder such that z=E(S). In some examples, the latent code is assigned to the texel corresponding to the strand's root location on the scalp. In some examples, where two strands map to the same texel due to spatial proximity, one strand may be selected at random. This process produces a raw scalp or skin texture, e.g., $T_{raw} \in$ R^(256×256×64), as illustrated in Fig. 3. In some examples, each texel contains a latent strand code. In some examples, hair density varies across different scalp regions, and a density map D $\in$ R^(256×256×1) can be introduced with values in range [0,1] indicating the probability that a strand is present at each texel.

In some embodiments, the process of constructing the scalp or skin texture may result in sparse regions where no latent codes are assigned, as not every texel corresponds to a strand. This sparsity is especially pronounced in hairstyles exhibiting balding patterns and can lead to problems during 3D reconstruction, since sampling a texel without an associated latent code would produce undefined strand geometry. In some embodiments, to address this, the sparsely populated latent codes may be interpolated using a push-pull algorithm, ensuring that every texel on the scalp is assigned a valid strand latent code, as illustrated in FIG. 4.

In some embodiments, with the interpolated scalp or skin texture T, UV positions can be sampled according to the density map D to produce a full hairstyle H by decoding the corresponding latent code:

$$H = \mathcal{G}(Sample\,(T, D)) \;\ldots\ldots \text{Equation (3)}$$

where H denotes a full reconstructed hairstyle, $\mathcal{G}$ (·) denotes a strand decoder, Sample (·) denotes a sampling operation, T denotes an interpolated scalp or skin texture, and D denotes a density map.

In some embodiments, the Sample (·) operation performs probabilistic sampling in UV space, assigning higher sampling frequency to regions with greater density values. This enables the representation of hairstyles with non-uniform hair distribution. In some embodiments, reconstructing a full hairstyle involves sampling K positions on the scalp and retrieving the associated strand latent codes z via bilinear interpolation.

According to some embodiments, a generative model of scalp or skin textures T can be trained to learn a prior distribution over hairstyles. The model can be conditioned on image data, enabling high-quality 3D hair reconstruction from a single input image. In some embodiments, a denoiser model $\mathcal{D}_\theta$ can be trained using a diffusion transformer architecture, such as, for example, a Hourglass Diffusion Transformer architecture, which is particularly efficient for diffusion processes operating directly in pixel space, e.g., pixel-space diffusion tasks. The clean training sample for diffusion is defined as the concatenation of the scalp or skin texture and density map, denoted by y=[T, D]. The corresponding noised input is given by x=y+n where n~ N(0,σ^2 I) represents Gaussian noise with noise level σ. In some embodiments, following a generalized diffusion modeling formulation (e.g., the EDM formulation), the denoiser can be parametrized to predict the clean signal, the noise, or an interpolation between the two:

$$\mathcal{D}_\theta(\mathbf{x}; \sigma) = c_{\text{skip}}(\sigma)\mathbf{x} + c_{\text{out}}(\sigma)\mathcal{F}_\theta(c_{\text{in}}(\sigma)\mathbf{x}; c_{\text{noise}}(\sigma)) \;\ldots\ldots \text{Equation (4)}$$

where $\mathcal{F}_\theta$ is the network to train, $c_{\text{skip}}$ is a skip connection modulator, $c_{\text{in}}$ and $c_{\text{out}}$ scale the input and output magnitudes, and $c_{\text{noise}}$ provides the noise-level conditioning.

In some embodiments, the training loss L for each spatial location and noise level is defined as:

$$L(\mathcal{D}_\theta, y, n, \sigma) \;= \| \mathcal{D}_\theta(y + n; \sigma) - y \|_2^2 \;\ldots\ldots \text{Equation (5)}$$

where y denotes the clean target data, n denotes the Gaussian noise added to the clean data, $\sigma$ denotes the noise level, and $\mathcal{D}_\theta$ (y + n; $\sigma$) denotes the denoiser network's prediction of the clean data.

According to certain embodiments, the denoising network outputs a clean scalp or skin texture T and a density map D. In some examples, not all channels of the scalp or skin texture contribute equally to perceptual strand reconstruction. Some channels encode meaningful attributes such as curliness or length, while others are noisy and have limited influence on the decoded strand geometry. To address this, the loss contribution of each texture channel is down-weighted according to its perceptual impact on strand shape.

In some embodiments, no direct perceptual metric is available, the system reuses the strand-level data term Ldata from the VAE training. In some examples, the mean strand is defined as S_0=G(z_0), where z_0=[0]^64 is the zero latent vector. Each latent dimension is then perturbed individually, the resulting strand is decoded, and its deviation from the mean strand is measured using the strand-level loss. This provides a proxy for the perceptual sensitivity of each latent dimension. It is to be understood that in some embodiments, the latent dimensionality may be any value sufficient to encode strand geometry. The weight for dimension i is therefore:

$$w_i = \mathcal{L}_{\text{strand}}(S_0, \mathcal{G}(\mathbf{z}_0 + \epsilon \cdot \mathbf{j}_i)) \;\ldots\ldots \text{Equation (6)}$$

where $\mathbf{j}_i$ is a vector of zeros with a 1 at the i-th position, $\mathbf{z}_0$ is the zero latent code, $S_0$ is the mean strand, $\varepsilon$ is the perturbation strength (e.g., empirically set to be 0.8), $\mathcal{G}$ ($\mathbf{z}_0 + \varepsilon \cdot \mathbf{j}_i$) is the perturbed strand, and $\mathcal{L}_{\text{strand}}$ is the strand-level distance metric. A final weight vector can be obtained by normalizing:

$$\mathbf{w} = \frac{w_i}{\sum_0^{64} w_i} \;\ldots\ldots \text{Equation (7)}$$

where $w_i$ is the raw importance score for latent dimension I, and $\sum_0^{64} w_i$ is the sum of all raw importance scores across the 64 latent dimensions.

In some embodiments, an additional weighting term is incorporated to balance error contributions across noise levels. In some embodiments, this may follow the approach of a generalized diffusion-modeling approach such as, for example, EDM2, which treats denoising as a form of multi-task learning and lets the network predict a log-variance of the uncertainty u(σ) for a certain noise level σ. Combining the per-channel weighting with the per-noise level weighting yields the final formulation for the diffusion loss, expressed as an expectation over noise levels and spatial dimensions/positions:

$$\mathcal{L}(\mathcal{D}_\theta, u) = \mathbb{E}_{\mathbf{y},\mathbf{n},\sigma}\left[\frac{\mathbf{w}}{e^{u(\sigma)}}\mathcal{L}(\mathcal{D}_\theta, \mathbf{y}, \mathbf{n}, \sigma) + u(\sigma)\right] \ \ \dots\dots \text{ Equation (8)}$$

where $\mathcal{L}(\mathcal{D}_\theta, u)$ is the overall diffusion training loss, depending on the denoiser network $\mathcal{D}_\theta$ and the uncertainty-prediction function $u(\sigma)$, y denotes the clean training samples (scalp or skin texture + density map), n denotes Gaussian noise added to the sample, and w denotes the per-channel perceptual weight vector.

Previous approaches have largely relied on two-dimensional orientation maps extracted using Gabor filters to align generated strands with the input image. However, in some examples, orientation maps often fail to capture true hair-growth direction and become unreliable for heavily occluded hairstyles. According to some embodiments, systems and methods described herein eliminate the need for orientation maps and instead condition a diffusion network using features extracted from the image. In some embodiments, a pretrained vision transformer model (e.g., a pre-trained DINOv2-large model) can be used to encode the RGB image into a local feature map $\mathcal{F}_{map} \in \mathbb{R}^{55 \times 55 \times 1024}$ and a global CLS token $\mathcal{F}_{cls} \in \mathbb{R}^{1024}$. FIG. 2 illustrates a CLS token 205. The rendered synthetic images are sufficiently realistic such that a model trained exclusively on synthetic data can generalize effectively to in-the-wild photographs.

In some embodiments, when the scalp or skin texture and the RGB image are not spatially aligned, cross-attention layers (e.g., cross-attention 206 in FIG. 2) can be added before each downsampling stage of the denoiser, enabling the network to learn which regions of the feature map $\mathcal{F}_{map}$ to attend to. The global CLS token $\mathcal{F}_{cls}$ is used to condition the network in a manner similar to the noise-level conditioning σ described in HDiT.

In some embodiments, to support both conditional and unconditional generation within the same architecture, the denoiser is trained using classifier-free guidance by randomly dropping the conditioning signal with a probability of 10%.

In some embodiments, the proposed systems and methods (e.g., DiffLocks™ system) can be evaluated using both synthetic data and in-the-wild images. Ablation studies may be conducted to assess the contribution of individual components.

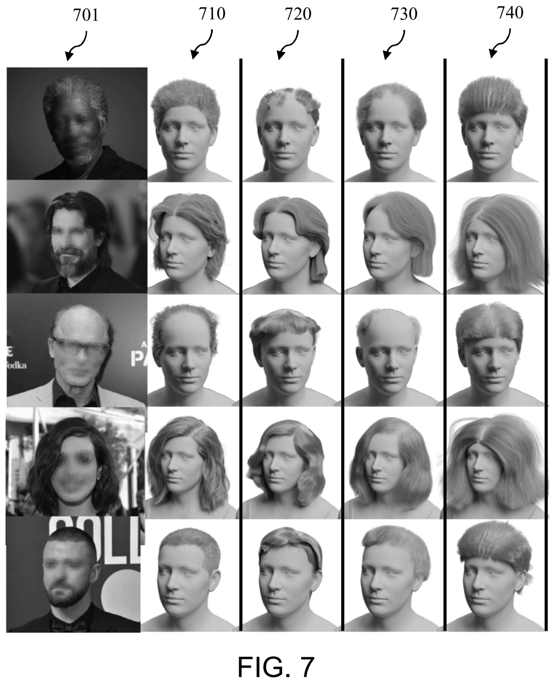

In some embodiments, the DiffLocks™ system is compared with some existing state-of-the-art single-image 3D hair reconstruction methods, including HairStep and NeuralHDHair. A comparison is also performed with HAAR, a conditional 3D hair generation method primarily designed for text-to-hair synthesis but adaptable to image-to-hair via LLaVA-based text extraction. Comparative results are presented in FIG. 7, where reconstructed 3D hair strands 710, 720, 730 and 740 are obtained from the input images 701 through DiffLocks™, HairStep, NeuralHDHair and HAAR processes, respectively. The DiffLocks™ system is capable of reliably reconstructing a wide range of hairstyles while capturing substantially finer detail than prior methods. It is worth noting that HAAR was originally developed for text-driven hair generation rather than image-based reconstruction. To enable a fair comparison, LLaVA was used to extract a textual description of the hairstyle from the input image and then apply HAAR's text-to-3D pipeline. Qualitatively, HairStep and NeuralHDHair tend to reproduce the coarse silhouette of the hairstyle but fail to capture fine-scale detail, curls, and complex strand interactions, often producing nearly parallel strands. These methods also struggle with balding patterns and afro-textured hairstyles. In contrast, the systems and methods described herein generate high-quality, realistic strands across a wide range of styles. HAAR, despite its text-to-hair design, is included for completeness; however, it frequently fails to match the hairstyle depicted in the input image.

In some embodiments, quantitative evaluation is performed on a synthetic dataset containing two medium-length hairstyles (e.g., straight and curly). To avoid potential bias toward path-traced images associated with a 3D creation and rendering system (e.g., Blender), RGB renderings are generated using Unreal Engine. To further increase hairstyle diversity, an additional synthetic dataset is introduced, consisting of ten representative hairstyles produced by the pipeline associated with the 3D creation and rendering system (e.g., Blender). Experiments on this dataset show that the DiffLocks™ process benefits from being trained on data generated by the same pipeline.

In some embodiments, across both datasets, the DiffLocks™ process demonstrates superior reconstruction of the hair's backside, highlighting the importance of diverse training data for learning a strong generative prior. Additional results on backside reconstruction, viewpoint robustness, and further visualizations are provided in the supplementary material.

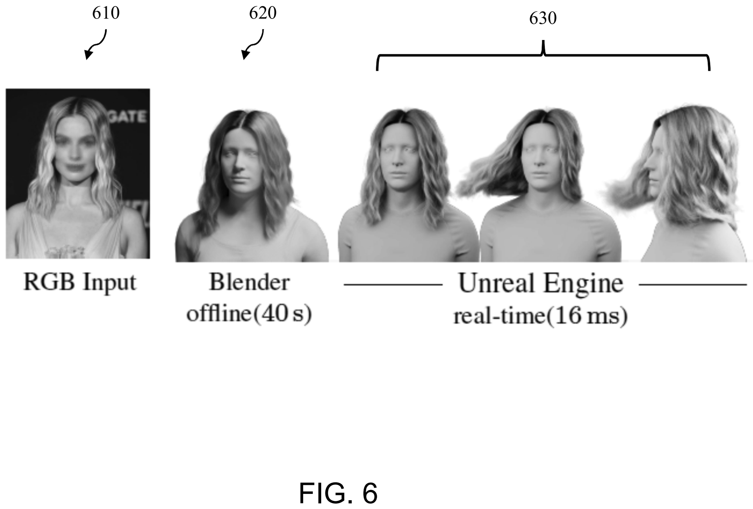

In some embodiments, runtime performance is evaluated by decomposing the reconstruction pipeline into three stages: (1) extraction of RGB features (e.g., DINOv2 features or, for baseline methods, orientation maps and segmentation), (2) generation of the hair model (scalp or skin texture for the DiffLocks™ system, 3D orientation fields for baselines), and (3) strand generation (decoding or growing strands). All benchmarks are performed on an NVIDIA H100 GPU. The DiffLocks™ system is observed to be relatively faster overall and does not require pre- or post-processing steps such as head fitting, segmentation, or strand refinement. In some embodiments, the reconstructed hair can be imported directly into Unreal Engine and rendered in real time (60 FPS). As shown in FIG. 6, a single image 610 is used to reconstruct the hairstyle, including a high-fidelity rendering of the reconstructed hair 620 through the Blender offline render (e.g., 40s) and a real-time rendering 630 with physics simulation enabled through Unreal Engine real-time Render (e.g., 16ms).

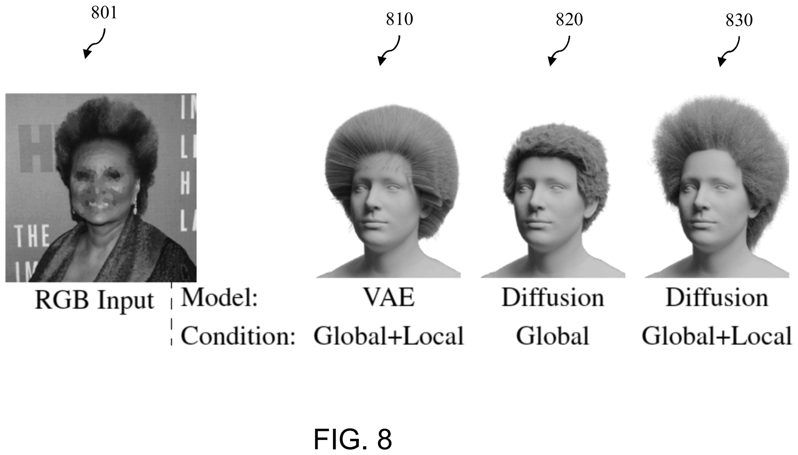

FIG. 8 shows reconstructed 3D hair results 810, 820, and 830 for the input image 801, demonstrating an ablation of the conditioning signal and model architecture. When the local conditioning provided by the feature map is removed and the model relies only on the global CLS token, reconstruction quality degrades substantially, as illustrated by the difference between 820 and 830. Similarly, replacing the diffusion-based scalp generator with a VAE produces overly smooth scalp or skin textures that lack fine-grained detail (e.g., 820). The complete model-using diffusion together with both local and global conditioning-achieves the most detailed and faithful reconstructions. In some embodiments, substituting the diffusion generator with a VAE (e.g., GroomGen-style) leads to hair that is overly smooth and missing local structure. Conditioning the diffusion model on both global and local features is therefore critical, and the local feature map plays a particularly important role; without it, the generated hairstyle diverges noticeably from the input image.

The generation framework can also be extended to facial hair, including beards and eyebrows, as well as body hair. It can also be used to generate fur and hair on animals.

According to certain embodiments, the systems and methods described herein provide a framework for reconstructing 3D hair strands from a single image by (1) constructing a relatively large synthetic dataset pairing 3D hair with RGB images, and (2) introducing an image-conditioned diffusion model operating on scalp or skin textures. The approach enables reconstruction of highly detailed 3D strands, surpassing prior methods without relying on heuristic post-processing to enhance realism.

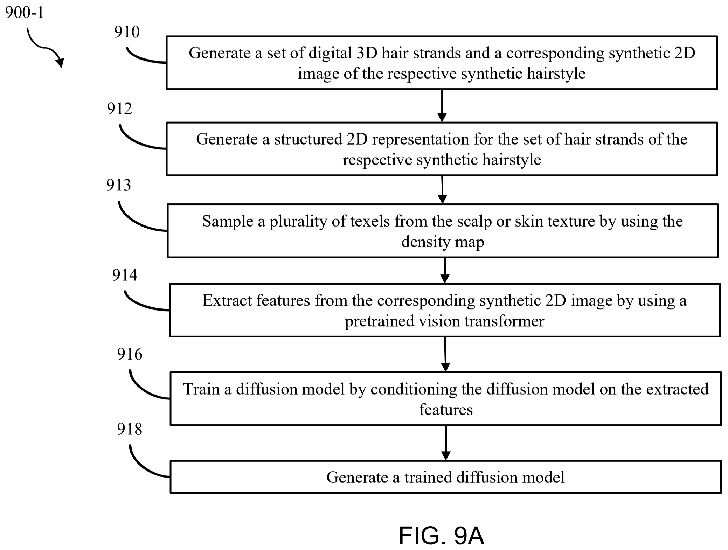

FIG. 9A is a flow diagram illustrating an example method 900-1 for reconstructing 3D hair, in accordance with embodiments of the subject matter of the disclosure. The method 900-1 includes processes 910, 912, 913, 914, 916 and 918. Although the above has been shown using a selected group of processes for the method 900-1, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

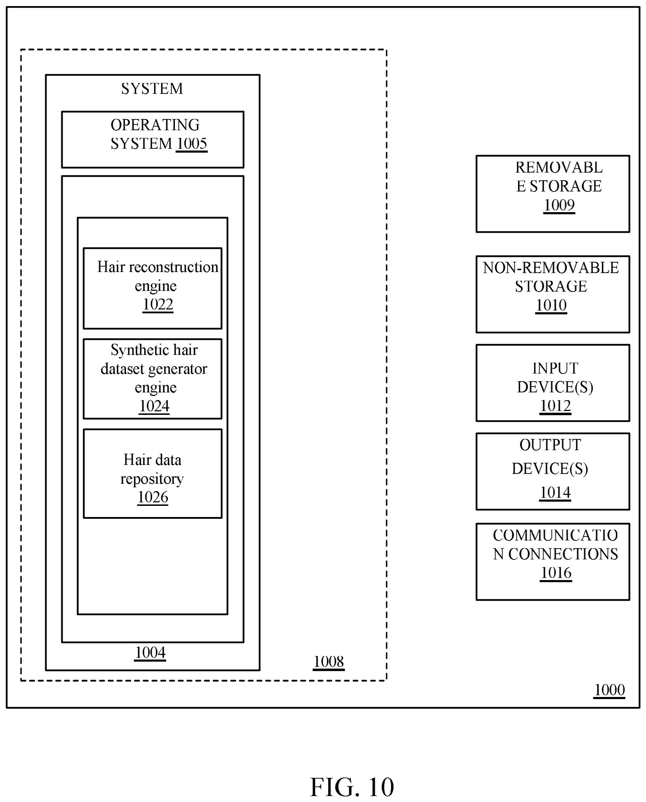

In some embodiments, some or all processes (e.g., steps) of the method 900-1 are performed by a system (e.g., the system 1000 in FIG. 10). In certain examples, some or all processes (e.g., steps) of the method 900-1 are performed by a computer and/or one or more processors directed by one or more pieces of software code. In some examples, some or all processes (e.g., steps) of the method 900-1 are performed according to instructions included by a non-transitory computer-readable medium (e.g., in a computer program product, such as a computer-readable flash drive). For example, a non-transitory computer-readable medium is readable by a computer.

According to some embodiments, at process 910, the system (e.g., the system 1000 in FIG. 10) generates a set of digital 3D hair strands and a corresponding synthetic image of the respective synthetic hairstyle. In some embodiments, for each synthetic hairstyle of a plurality of synthetic hairstyles, the system generates a pair of digital 3D hair strands and a corresponding synthetic image. In some embodiments, the system generates a digital human or animal body portion mesh based a base 3D body portion model. In some examples, the digital human or animal body portion mesh includes a scalp or skin surface with vertices where digital hair strands are to be located.

In some embodiments, the system adds a variation to a set of digital guide strands to generate the set of digital 3D hair strands on the digital human or animal body portion head mesh using geometry nodes. In some embodiments, the variation can include a physics-based variation and/or a randomized geometric variation. In some embodiments, the variation to the set of digital guide strands includes, for example, a hair length, a hair curliness, a hair density, a hair direction, a hair thickness, or a hair color.

In some embodiments, the system renders the respective synthetic hairstyle to the corresponding synthetic image based at least in part on the set of digital 3D hair strands. In some embodiments, the corresponding synthetic image is rendered through path tracing. In some embodiments, the corresponding synthetic image is rendered through real-time rasterization used in real-time game engines.

According to some embodiments, at process 912, the system (e.g., the system 1000 in FIG. 10) generates a structured 2D representation for the set of hair strands of the respective synthetic hairstyle. In some embodiments, the structured 2D representation includes a density map and a scalp or skin texture. In some embodiments, the system determines a root position of each digital 3D hair strand of the set of digital 3D hair strands in a 2D UV space. In some embodiments, the system generates the density map by, for each texel in the 2D UV space, determining a number of strand roots of the set of digital 3D hair strands inside each texel, and determining a continuous density value. In some embodiments, the system encodes a strand geometry of each digital 3D hair strand into a corresponding latent code. In some embodiments, the system fills the scalp or skin texture with a plurality of latent codes by interpolating the corresponding latent code for each texel in the scalp or skin texture such that each texel includes a respective latent code.

According to some embodiments, at process 913, the system (e.g., the system 1000 in FIG. 10) samples a plurality of texels from the scalp or skin texture by using the density map. In some embodiments, texels can be probabilistically sampled from the scalp or skin texture. In some examples, sampling follows the density map so dense regions produce more strands. In some embodiments, the system samples the plurality of texels probabilistically and guided by the density map. In some examples, each texel of the plurality of texels includes a latent vector.

According to some embodiments, at process 914, the system (e.g., the system 1000 in FIG. 10) extracts features from the corresponding synthetic image by using a pretrained vision transformer. In some embodiments, the extracted features include global features and local features.

According to some embodiments, at process 916, the system (e.g., the system 1000 in FIG. 10) trains a diffusion model based on the structured 2D representation and the corresponding synthetic image. In some embodiments, the system trains the diffusion model by conditioning the diffusion model on the extracted features.

According to some embodiments, at process 918, the system (e.g., the system 1000 in FIG. 10) generates a trained diffusion model. In some embodiments, the system can apply the trained diffusion model to a single input image to generate a structured 2D representation of a hairstyle associated with the received image, and reconstruct a 3D hair geometry based on the structured 2D representation.

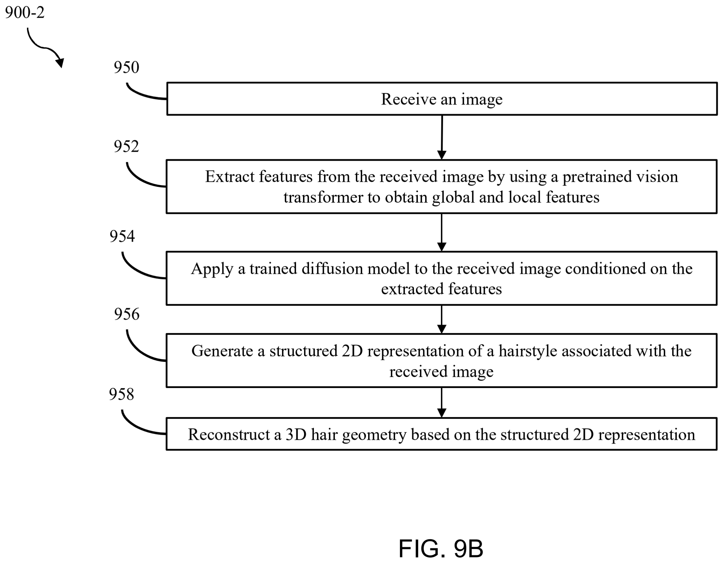

FIG. 9B is a flow diagram illustrating an example method 900-2 of reconstructing 3D hair geometry, in accordance with embodiments of the subject matter of the disclosure. The method 900-2 includes processes 950, 912, 914, 916 and 918. Although the above has been shown using a selected group of processes for the method 900-2, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the method 900-2 are performed by a system (e.g., the system 1000 in FIG. 10). In certain examples, some or all processes (e.g., steps) of the method 900-2 are performed by a computer and/or a processor directed by a piece of software code. In some examples, some or all processes (e.g., steps) of the method 900-2 are performed according to instructions included by a non-transitory computer-readable medium (e.g., in a computer program product, such as a computer-readable flash drive). For example, a non-transitory computer-readable medium is readable by a computer.

According to some embodiments, at process 950, The system (e.g., the system 1000 shown in FIG. 10) receives an input image. In some examples, the input image depicts a portion of a human or animal body on which hair strands or fur are present. For instance, the input image may be a head-and-shoulders portrait captured by a digital camera, a smartphone, or another imaging device. The image may have any suitable resolution, such as 512×512 pixels, 1024×1024 pixels, or higher, depending on the capabilities of the capture device and the requirements of the system.

According to some embodiments, at process 952, the system (e.g., the system 1000 in FIG. 10) extracts features from the received image by using a pretrained vision transformer. In some embodiments, the extracted features include global features and local features. An example pretrained vision transformer is DINOv2.

According to some embodiments, at process 954, the system (e.g., the system 1000 in FIG. 10) applies a trained diffusion model to the received image conditioned on the extracted features. In some embodiments, the extracted features are fed into (e.g., condition) the diffusion model. In some examples, the system uses a pretrained vision transformer model (e.g., the pretrained DINOv2 model) to extract local and global features, which are used to guide the trained diffusion model (e.g., a scalp diffusion model) to denoise a density map and a scalp or skin texture containing latent codes for strand geometry.

According to some embodiments, at process 956, the system (e.g., the system 1000 in FIG. 10) generates a structured 2D representation of a hairstyle associated with the received image. In some embodiments, the structured 2D representation includes a scalp or skin texture and a density map associated with the received image. In some embodiments, the system iteratively denoises the structured 2D representation over a plurality of diffusion timesteps.

According to some embodiments, at process 958, the system (e.g., the system 1000 in FIG. 10) reconstructs a 3D hair geometry based on the structured 2D representation. In some embodiments, the system samples a plurality of texels from the scalp or skin texture by using the density map. In some embodiments, the system samples the plurality of texels probabilistically and guided by the density map. In some examples, each texel of the plurality of texels includes a latent vector. In some embodiments, the system decodes the latent vector into a 3D hair strand.

FIG. 10 is a simplified diagram of a computing system 1000 (e.g., a server, a computing device, a computing system, etc.), with which aspects of the present disclosure may be practiced. The computing device components described below may be suitable for the computing devices described above. The computing system 1000 may include a system 1004 which may include or couple to at least one processing unit. Depending on the configuration and type of computing device, the system 1004 may include, for example, volatile storage (e.g., random access memory), non-volatile storage (e.g., read-only memory), flash memory, or any combination of such memories.

The system 1004 may include an operating system 1005, suitable for running a software application, such as one or more components supported by the systems described herein. As examples, the system 1004 may store one or more computing models to be applied by a hair reconstruction engine or processor 1022, and a synthetic hair dataset generator engine or processor 1024. In some embodiments, the system 1004 may store one or more computing models and/or the generated synthetic hair dataset in a hair data repository 1026. The operating system 1005, for example, may be suitable for controlling the operation of the computing system 1000.

According to certain embodiments, the hair reconstruction engine or processor 1022, and the synthetic hair dataset generator engine or processor 1024 can implement various methods (e.g., the method 900-1 in FIG. 9A, the method 900-2 in FIG. 9B, etc.) and systems (e.g., the system 100 in FIG. 1, etc.). In some embodiments, the hair reconstruction engine or processor 1022 can be or included in the hair reconstruction system 104 in FIG. 1.

A basic configuration is illustrated in FIG. 10 by those components within a dashed line 1008. The computing system 1000 may have additional features or functionality. For example, the computing system 1000 may also include additional data storage devices (removable and/or non-removable) such as, for example, magnetic disks, optical disks, or tape. Such additional storage is illustrated in FIG. 10 by a removable storage device 1009 and a non-removable storage device 1010.

As stated above, a number of programs and data files may be stored in the system 1004. While executing on a processing unit, the engines 1022 and 1024 may perform processes including, but not limited to, the aspects, as described herein. Other program modules that may be used in accordance with aspects of the present disclosure may include electronic mail and contacts applications, word processing applications, spreadsheet applications, database applications, slide presentation applications, drawing or computer-aided application programs, and the like.

Furthermore, aspects of the disclosure may be practiced in an electrical circuit including discrete electronic elements, packaged or integrated electronic chips containing logic gates, a circuit utilizing a microprocessor, or on a single chip containing electronic elements or microprocessors. For example, aspects of the disclosure may be practiced via a system-on-a-chip (SOC) where each or many of the components illustrated in FIG. 10 may be integrated onto a single integrated circuit. Such an SOC device may include one or more processing units, graphics units, communications units, system virtualization units and various application functionality, all of which are integrated (or "burned") onto the chip substrate as a single integrated circuit. When operating via an SOC, the functionality, described herein, with respect to the capability of the client to switch protocols, may be operated via application-specific logic integrated with other components of the computing system 1000 on the single integrated circuit (chip). Some aspects of the disclosure may also be practiced using other technologies capable of performing logical operations such as, for example, AND, OR, and NOT, including but not limited to mechanical, optical, fluidic, and quantum technologies. In addition, some aspects of the disclosure may be practiced within a general-purpose computer or in any other circuits or systems. As referred to herein, any processing can occur on a single processor or multiple processors.

The computing system 1000 may also have one or more input device(s) 1012, such as a keyboard, a mouse, a pen, a sound or voice input device, a touch or swipe input device, and the like. The output device(s) 1014, such as a display, speakers, a printer, etc. may also be included. The aforementioned devices are examples and others may be used. The computing system 1000 may include one or more communication connections 1016 allowing communications with computing units (e.g., GPUs, TPUs, etc.). Examples of suitable communication connections 1016 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system 1004, the removable storage device 1009, and the non-removable storage device 1010 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by the computing system 1000. Any such computer storage media may be part of the computing system 1000. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

According to certain embodiments, a method for reconstructing 3D hair geometry is provided. The method includes for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation, the plurality of texels, and the corresponding synthetic image to generate a trained diffusion model.

According to certain embodiments, a system includes at least one processor; and memory storing instructions that, when executed by the at least one processor, cause the system to perform a set of operations. In some examples, the set of operations includes for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation, the plurality of texels, and the corresponding synthetic image to generate a trained diffusion model.

According to certain embodiments, a non-transitory computer-readable medium stores instructions. In some examples, the instructions when executed by one or more processors, cause the one or more processors to perform a set of operations including for each synthetic hairstyle of a plurality of synthetic hairstyles, generating a set of digital 3D hair strands and a corresponding synthetic image of the respective synthetic hairstyle; generating a structured 2D representation for the set of hair strands of the respective synthetic hairstyle, the structured 2D representation including a density map and a scalp or skin texture; sampling a plurality of texels from the scalp or skin texture by using the density map; and training a diffusion model based on the structured 2D representation, the plurality of texels, and the corresponding synthetic image to generate a trained diffusion model.

In some embodiments, the step of generating a set of digital 3D hair strands and a corresponding synthetic image further includes generating a digital human or animal body portion mesh based a base 3D body portion model, the digital human or animal body portion mesh including a scalp or skin surface with vertices where digital hair strands are to be located; and adding a variation to a set of digital guide strands to generate the set of digital 3D hair strands on the digital human or animal body portion mesh using geometry nodes. In some embodiments, the variation includes a physics-based variation or a randomized geometric variation.

In some embodiments, the step of generating a set of digital 3D hair strands and a corresponding synthetic image further includes rendering the respective synthetic hairstyle to the corresponding synthetic image based at least in part on the set of digital 3D hair strands. In some embodiments, the corresponding synthetic image is rendered through path tracing. In some embodiments, the corresponding synthetic image is rendered through real-time rasterization used in real-time game engines.

In some embodiments, the step of generating a structured 2D representation for the set of hair strands further includes determining a root position of each digital 3D hair strand of the set of digital 3D hair strands in a 2D UV space; generating the density map by, for each texel in the 2D UV space, determining a number of strand roots of the set of digital 3D hair strands inside each texel, and determining a continuous density value; and encoding a strand geometry of each digital 3D hair strand into a corresponding latent code. In some embodiments, the method further includes filling the scalp or skin texture with a plurality of latent codes by interpolating the corresponding latent code for each texel in the scalp or skin texture such that each texel includes a respective latent code.

In some embodiments, the step of sampling a plurality of texels comprises sampling the plurality of texels probabilistically and guided by the density map.

In some embodiments, the step of training a diffusion model based on the structured 2D representation and the corresponding synthetic image further includes extracting features from the corresponding synthetic image by using a pretrained vision transformer; and conditioning the diffusion model on the extracted features.

In some embodiments, the method further includes receiving an image; extracting features from the received image by using a pretrained vision transformer to obtain global and local features; applying the trained diffusion model to the received image conditioned on the extracted features to generate a structured 2D representation of a hairstyle associated with the received image; and reconstructing a 3D hair geometry based on the structured 2D representation.

In some embodiments, the structured 2D representation includes a scalp or skin texture and a density map associated with the received image. In some embodiments, the method further includes sampling a plurality of texels from the scalp or skin texture by using the density map, each texel including a latent vector; and decoding the latent vector into a 3D hair strand. In some embodiments, the decoding of the latent vector into the 3D hair strand is performed without using a guide strand or an orientation map. In some embodiments, the step of applying the trained diffusion model comprises iteratively denoising the structured 2D representation over a plurality of diffusion timesteps.

Various modifications and additions can be made to the exemplary embodiments discussed without departing from the scope of the present disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as they fall within the scope of the claims, together with all equivalents thereof.

**Claims**

1. A method for reconstructing 3D hair geometry, the method comprising:

for each synthetic hairstyle of a plurality of synthetic hairstyles, generating a set of digital 3D hair strands and a corresponding synthetic image of the respective synthetic hairstyle;
generating a structured 2D representation for the set of hair strands of the respective synthetic hairstyle, the structured 2D representation including a density map and a scalp or skin texture;
sampling a plurality of texels from the scalp or skin texture by using the density map; and
training a diffusion model based on the structured 2D representation, the plurality of texels, and the corresponding synthetic image to generate a trained diffusion model.

2. The method of claim 1, wherein the step of generating a set of digital 3D hair strands and a corresponding synthetic image further comprises:

generating a digital human or animal body portion mesh based a base 3D body portion model, the digital human or animal body portion mesh including a scalp or skin surface with vertices where digital hair strands are to be located; and
adding a variation to a set of digital guide strands to generate the set of digital 3D hair strands on the digital human or animal body portion mesh using geometry nodes.

3. The method of claim 1, wherein the step of generating a set of digital 3D hair strands and a corresponding synthetic image further comprises:
rendering the respective synthetic hairstyle to the corresponding synthetic image based at least in part on the set of digital 3D hair strands.

4. The method of claim 3, wherein the corresponding synthetic image is rendered through path tracing or real-time rasterization used in real-time game engines.

5. The method of claim 1, wherein the step of generating a structured 2D representation for the set of hair strands further comprises:

determining a root position of each digital 3D hair strand of the set of digital 3D hair strands in a 2D UV space;
generating the density map by, for each texel in the 2D UV space, determining a number of strand roots of the set of digital 3D hair strands inside each texel, and determining a continuous density value; and
encoding a strand geometry of each digital 3D hair strand into a corresponding latent code.

6. The method of claim 5, further comprising filling the scalp or skin texture with a plurality of latent codes by interpolating the corresponding latent code for each texel in the scalp or skin texture such that each texel includes a respective latent code.

7. The method of claim 1, wherein the step of sampling a plurality of texels comprises sampling the plurality of texels probabilistically and guided by the density map.

8. The method of claim 1, wherein the step of training a diffusion model based on the structured 2D representation and the corresponding synthetic image further comprises:

extracting features from the corresponding synthetic image by using a pretrained vision transformer; and
conditioning the diffusion model on the extracted features.

9. The method of claim 1, further comprising:

receiving an image;

extracting features from the received image by using a pretrained vision transformer to obtain global and local features;

applying the trained diffusion model to the received image conditioned on the extracted features to generate a structured 2D representation of a hairstyle associated with the received image; and

reconstructing a 3D hair geometry based on the structured 2D representation.

10. The method of claim 9, wherein the structured 2D representation includes a scalp or skin texture and a density map associated with the received image.

11. The method of claim 10, further comprising:

sampling a plurality of texels from the scalp or skin texture by using the density map, each texel including a latent vector; and

decoding the latent vector into a 3D hair strand.

12. The method of claim 9, wherein the decoding of the latent vector into the 3D hair strand is performed without using a guide strand or an orientation map.

15. The method of claim 11, wherein the step of applying the trained diffusion model comprises iteratively denoising the structured 2D representation over a plurality of diffusion timesteps.

13. A system for reconstructing 3D hair geometry, the system comprising:

at least one processor; and

memory storing instructions that, when executed by the at least one processor, cause the system to perform a set of operations, the set of operations comprising:

for each synthetic hairstyle of a plurality of synthetic hairstyles, generating a set of digital 3D hair strands and a corresponding synthetic image of the respective synthetic hairstyle;

generating a structured 2D representation for the set of hair strands of the respective synthetic hairstyle, the structured 2D representation including a density map and a scalp or skin texture;

sampling a plurality of texels from the scalp or skin texture by using the density map; and

training a diffusion model based on the structured 2D representation and the corresponding synthetic image to generate a trained diffusion model.

14. The system of claim 16, wherein the step of generating a set of digital 3D hair strands and a corresponding synthetic image further comprises:

generating a digital human or animal body portion mesh based a base 3D body portion model, the digital human or animal body portion mesh including a scalp or skin surface with vertices where digital hair strands are to be located; and

adding a variation to a set of digital guide strands to generate the set of digital 3D hair strands on the digital human or animal body portion mesh using geometry nodes.

15. A non-transitory computer-readable medium storing instructions for reconstructing 3D hair geometry, the instructions when executed by one or more processors, cause the one or more processors to perform a set of operations comprising:

for each synthetic hairstyle of a plurality of synthetic hairstyles, generating a set of digital 3D hair strands and a corresponding synthetic 2D image of the respective synthetic hairstyle;

generating a structured 2D representation for the set of hair strands of the respective synthetic hairstyle, the structured 2D representation including a density map and a scalp or skin texture;

sampling a plurality of texels from the scalp or skin texture by using the density map; and

training a diffusion model based on the structured 2D representation and the corresponding synthetic image to generate a trained diffusion model.

FIG. 1

FIG. 2

FIG. 3

FIG. 4

510

FIG. 5A

520

FIG. 5B

530

FIG. 5C

540

FIG. 5D

610  620  630

RGB Input | Blender offline(40 s) — Unreal Engine real-time(16 ms)

FIG. 6

EP 4 787 322 A1

EP 4 787 322 A1

FIG. 7

FIG. 8

900-1

Generate a set of digital 3D hair strands and a corresponding synthetic 2D image of the respective synthetic hairstyle

912 Generate a structured 2D representation for the set of hair strands of the respective synthetic hairstyle

913 Sample a plurality of texels from the scalp or skin texture by using the density map

914 Extract features from the corresponding synthetic 2D image by using a pretrained vision transformer

916 Train a diffusion model by conditioning the diffusion model on the extracted features

918 Generate a trained diffusion model

FIG. 9A

EP 4 787 322 A1

900-2

950 — Receive an image

952 — Extract features from the received image by using a pretrained vision transformer to obtain global and local features

954 — Apply a trained diffusion model to the received image conditioned on the extracted features

956 — Generate a structured 2D representation of a hairstyle associated with the received image

958 — Reconstruct a 3D hair geometry based on the structured 2D representation

FIG. 9B

SYSTEM

OPERATING
SYSTEM 1005

Hair reconstruction
engine
1022

Synthetic hair
dataset generator
engine
1024

Hair data
repository
1026

1004

1008

REMOVABL
E STORAGE
1009

NON-REMOVABLE
STORAGE
1010

INPUT
DEVICE(S)
1012

OUTPUT
DEVICE(S)
1014

COMMUNICATIO
N CONNECTIONS
1016

1000

FIG. 10

Europäisches
Patentamt

European
Patent Office

Office européen
des brevets

# EUROPEAN SEARCH REPORT

**Application Number**

EP 26 15 6281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sklyarova Vanessa ET AL: "Text-Conditioned Generative Model of 3D Strand-based Human Hairstyles", arXiv online preprint archive (Cornell University Library, USA), 18 December 2023 (2023-12-18), pages 1-17, XP093398868, Retrieved from the Internet: URL:https://arxiv.org/pdf/2312.11666 * abstract; figure 2 * * section 3 * | 1-16 | INV. G06T13/40 G06T19/20 G06T15/20 G06T17/00 |
| A | Sklyarova Vanessa ET AL: "Neural Haircut: Prior-Guided Strand-Based Hair Reconstruction", arXiv online preprint archive (Cornell University Library, USA), 12 June 2023 (2023-06-12), pages 1-23, XP093398870, Retrieved from the Internet: URL:https://arxiv.org/pdf/2306.05872v2 * abstract; figure 2 * * section 3 * | 1-16 | |

TECHNICAL FIELDS
SEARCHED        (IPC)

G06T

The present search report has been drawn up for all claims

| Place of search | Date of completion of the search | Examiner |
|---|---|---|
| Berlin | 26 May 2026 | Bouchaâla, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

**Patent documents cited in the description**

- US 63753509